# FASCICULE DE BREVET EUROPEEN

(11) **EP 1 217 865 B1**
(45) Date de publication et mention de la délivrance du brevet: **11.08.2010**
(21) Numéro de dépôt: 01403298.1
(22) Date de dépôt: 19.12.2001
(51) Int. Cl.: H04Q 11/04, H04L 12/56

(54) **Dispositif et procédé de contrôle de flux dans un réseau commuté**
Vorrichtung und Verfahren zur Flusskontrolle in einem geschalteten Netz
Device and method for flow control in a switched network

(30) Priorité: 21.12.2000 FR 0016766
(43) Date de publication de la demande: 26.06.2002
(73) Titulaire: AIRBUS OPERATIONS, 31060 Toulouse (FR)
(72) Inventeur: Saint Etienne, Jean-François, 31270 Cugnaux (FR)
(74) Mandataire: Poulin, Gérard

(56) Documents cités:
- EP-A- 0 596 624
- US-A- 5 796 719
- CHOI Y J ET AL: "OPTIMAL BANDWIDTH AND BUFFER ALLOCATION METHOD FOR HETEROGENEOUS TRAFFIC WITH MULTIPLE QOS IN ATM NETWORKS" ELECTRONICS LETTERS, IEE STEVENAGE, GB, vol. 34, no. 19, 17 septembre 1998 (1998-09-17), pages 1822-1823, XP000853409 ISSN: 0013-5194

## Description

### Domaine technique

La présente invention concerne un dispositif et un procédé de contrôle de flux dans un réseau commuté, notamment dans le domaine de la communication entre des équipements embarqués, tels que par exemple des calculateurs, dans le domaine avionique.

### Etat de la technique antérieure

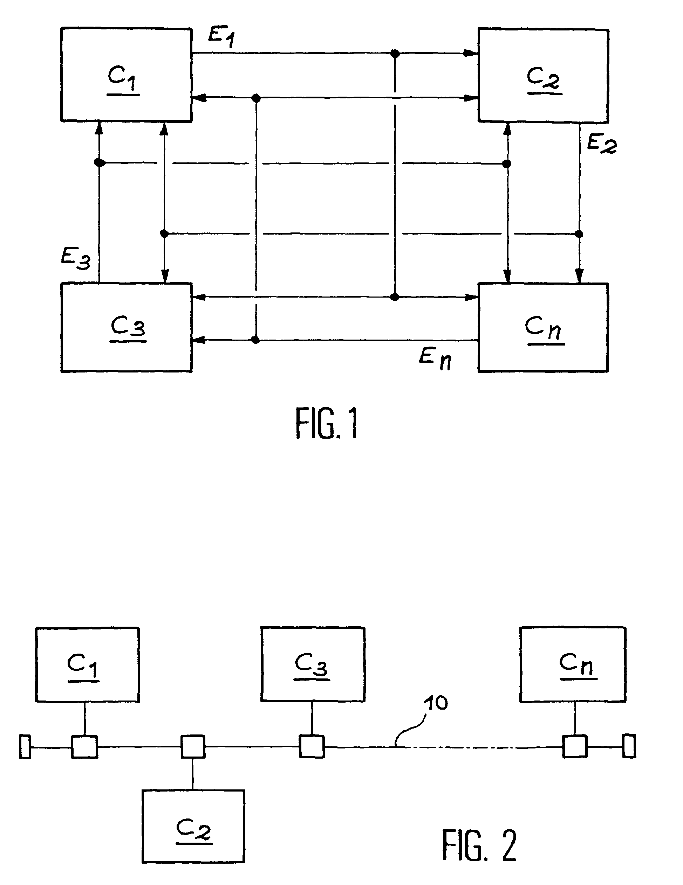

Les réseaux de communication de l'art connu utilisés dans le domaine avionique ont souvent une architecture telle que celle représentée sur la figure 1, correspondant à la norme ARINC 429, dans laquelle n équipements C₁, C₂., Cₙ, par exemple des calculateurs, échangent des informations. Chaque émetteur dispose d'une liaison physique vers chacun des récepteurs. Les informations envoyées par un émetteur peuvent occuper toute la bande passante des liaisons physiques concernées. Ainsi chacun des équipements C₁, C₂., Cₙ, sort une ligne d'émission E₁, E₂, ., Eₙ reliée à l'ensemble des autres équipements qui sont considérés comme des récepteurs par rapport à cette ligne d'émission. Cette architecture présente l'avantage de garantir une transmission des informations d'un émetteur vers un ou plusieurs récepteurs, sans risque de conflit avec les informations transmises par les autres émetteurs, puisque ces derniers utilisent des liaisons physiques différentes. La durée de communication d'un émetteur vers un récepteur est ainsi définie de façon déterministe. Par contre, lorsque le nombre d'équipements interconnectés augmente, le nombre de lignes de communication devient vite très important. Une telle architecture présente alors de nombreux inconvénients en termes de poids, de quantité de connectique (d'où risques potentiels de pannes), de complexité, de temps de câblage, de maintenance, etc.

Il existe également d'autres méthodes de communication qui reposent sur des architectures de type bus, comme illustré sur la figure 2, correspondant notamment aux normes ARINC 629 et MIL 1553. Les informations multiplexées circulent alors en mode "half-duplex" entre les différents équipements C₁, C₂ ., Cₙ sur un bus 10. Ce type d'architecture est avantageux du fait de la simplicité du câblage physique correspondant. Par contre, il nécessite de gérer les risques de collision entre les informations provenant de différents émetteurs puisque ceux-ci partagent La même liaison physique. De plus, le débit est diminué par rapport à une liaison point à point puisque la bande passante de chaque liaison physique est partagée entre différents émetteurs.

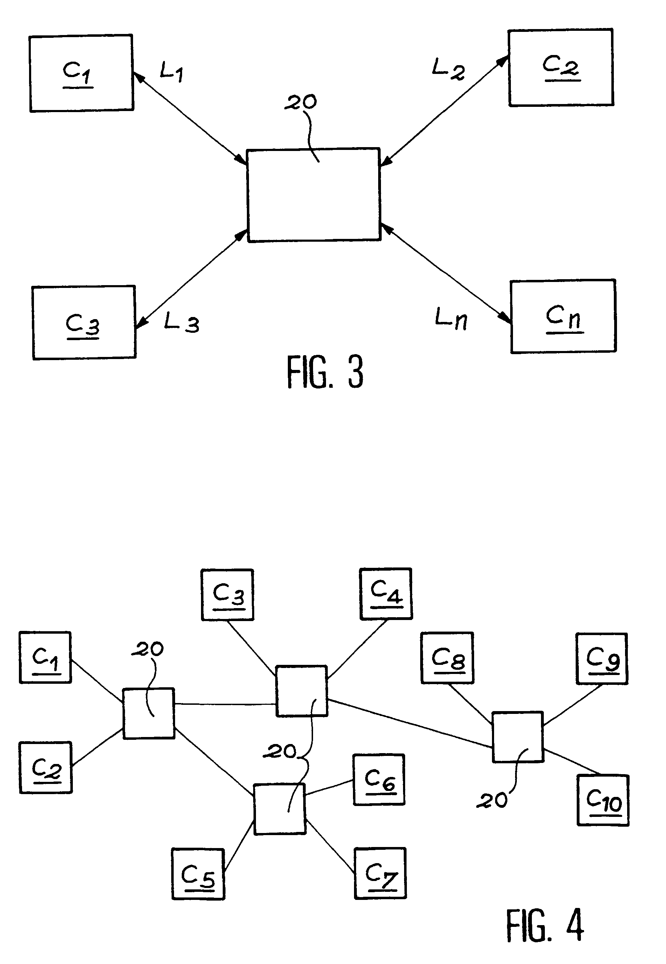

Il est également connu d'utiliser une architecture en étoile autour d'un interface central 20 assurant des fonctions de commutateur de réseau, comme illustré sur la figure 3. n équipements C₁, C₂., Cₙ sont maintenant reliés à un commutateur 20 au moyen de liaisons L₁, L₂., Lₙ. Le nombre de liaisons physiques (câble, etc.) est ainsi réduit.

D'une façon plus générale, cette dernière architecture peut être étendue à un réseau comportant plusieurs commutateurs 20 reliés en cascade, comme illustré sur la figure 4. Elle peut être utilisée dans les réseaux informatiques de type "Ethernet" pour la communication entre les terminaux. Un tel réseau présente l'avantage de ne nécessiter qu'un nombre de liaisons relativement restreint lorsque le nombre de terminaux interconnectés devient important. Par contre un terminal Cᵢ (i=1,., n) ne dispose que d'une seule liaison physique, arrivant du commutateur 20 correspondant, de réception des informations provenant de l'ensemble des autres terminaux et destinées à ce terminal Cᵢ. Il y a donc risque de conflit si plusieurs terminaux tentent d'envoyer simultanément un grand nombre d'informations à Cᵢ. Ce problème est résolu en utilisant la notion de lien virtuel : un lien virtuel est en effet une liaison logique permettant d'envoyer des informations d'un émetteur vers au moins un récepteur, chaque lien virtuel empruntant au moins une liaison physique.

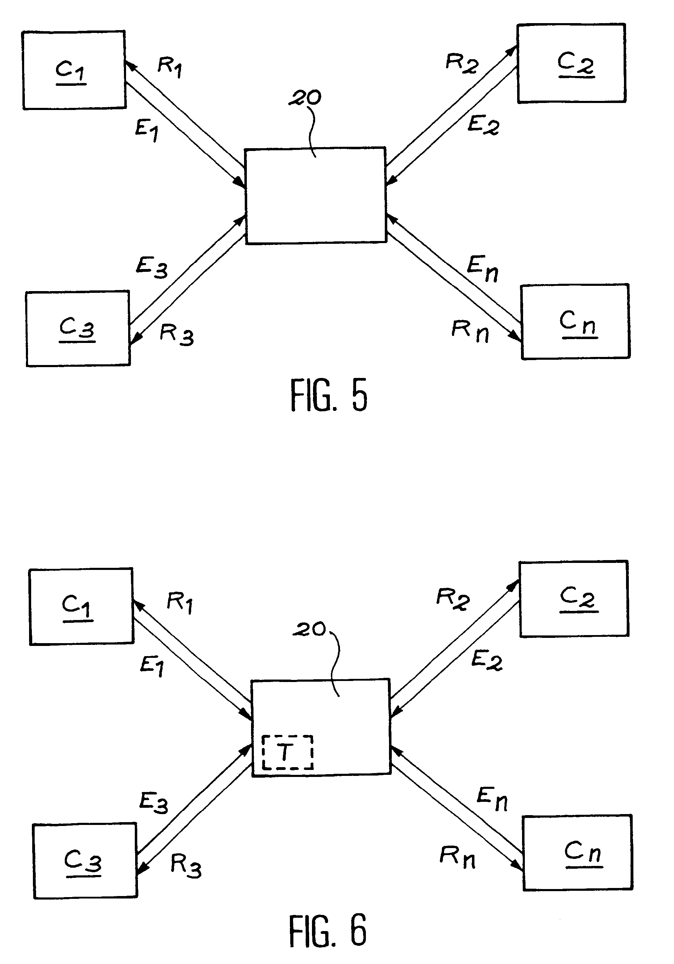

Comme illustré sur la figure 5, chaque lien virtuel est unidirectionnel d'un émetteur vers un ou plusieurs récepteurs. Les informations sont émises sous la forme de paquets de données comportant un en-tête représentatif du numéro de lien virtuel. Dans un réseau "Ethernet", le commutateur 20 gère de façon dynamique les liens virtuels et les débits afin de s'adapter au mieux au trafic instantané du réseau. L'allocation des bandes passantes des différents liens virtuels est réalisée de telle sorte qu'à tout instant la somme des bandes passantes de tous les liens virtuels empruntant une liaison physique donnée soit inférieure à la bande passante théorique de ladite liaison physique, une bande passante étant une capacité de transmission exprimée en nombre d'informations par unité de temps, par exemple en bits/s. Par contre, cette allocation dynamique des bandes passantes des différents liens virtuels ne permet pas de garantir qu'une information sera transmise entre deux terminaux dans un délai donné. Il s'agit là d'un inconvénient majeur pour des applications nécessitant des périodicités imposées de rafraîchissement des informations échangées.

L'invention a pour objectif de pallier ces inconvénients en proposant un dispositif et un procédé de contrôle de flux dans un réseau commuté.

Une demande de brevet européen EP 0 596 624 décrit un réseau de transmission à large bande dans lequel des appels ayant des conditions de largeur de bande et des sensibilités de retard largement différentes sont manipulés avec une allocation de largeur de bande et une planification de transmission. Chaque appel est classifié selon certaines caractéristiques, telles que la largeur de bande exigée et la sensibilité au retard. Chaque classe d'appel est dirigée vers un circuit de mise en file d'attente séparée. Quelques appels dans certaines classes sont dirigées vers leurs propres circuits de mise en file d'attente. Un circuit de multiplexage fonctionne selon un arrangement dynamique de tranches de temps qui implique de définir une période de durée de cycle de service. Ce circuit scinde la période de durée de cycle en pluralité de tranches de temps, dont chacune détermine combien de paquets d'informations sont transmis à partir de chaque circuit de mise en file d'attente pendant la période de durée de cycle.

### Exposé de l'invention

L'invention concerne un dispositif de contrôle de flux dans un réseau de communication commuté comprenant plusieurs équipements liés à au moins un commutateur au moyen de plusieurs liaisons physiques, dans lequel au moins un lien virtuel, qui est une liaison logique unidirectionnelle empruntant au moins une liaison physique, permet d'envoyer des informations d'un équipement émetteur vers au moins un équipement récepteur, caractérisé en ce que chaque commutateur, qui gère de façon dynamique les liens virtuels et les débits afin de s'adapter au mieux au trafic instantané du réseau, comprend une table d'allocation, définie de façon statique, qui associe une bande passante à chacun des liens virtuels de manière à garantir un délai maximal de transmission d'une information sur chaque lien virtuel d'un équipement émetteur vers au moins un équipement récepteur et une allocation telle que pour toute liaison physique la somme des bandes passantes allouées aux différents liens virtuels empruntant cette liaison physique est inférieure à la bande passante de cette liaison physique, afin de garantir qu'il n'y aura jamais d'encombrement du réseau de communication.

Avantageusement la table d'allocation est telle qu'une bande passante peut être affectée à un ensemble de flux.

Ce dispositif permet ainsi de garantir un délai maximal de transmission d'une information sur chaque lien virtuel. Afin de garantir qu'il n'y aura jamais d'encombrement du réseau de communication, cette allocation est telle que pour toute liaison physique, la somme des bandes passantes allouées aux différents liens virtuels empruntant cette liaison physique est inférieure à la bande passante de cette liaison physique, cette bande passante dépendant des caractéristiques du support physique.

L'invention concerne également un procédé de contrôle de flux dans un réseau de communication commuté, comprenant plusieurs équipements liés à au moins un commutateur au moyen de plusieurs liaisons physiques, dans lequel au moins un lien virtuel, qui est une liaison logique unidirectionnelle empruntant au moins une liaison physique, permet d'envoyer des informations d'un équipement émetteur vers au moins un équipement récepteur, caractérisé en ce que, dans le commutateur, qui gère de façon dynamique les liens virtuels et les débits afin de s'adapter au mieux au trafic instantané du réseau on utilise une table d'allocation définie de façon statique, qui associe une bande passante à chacun des liens virtuels de manière à garantir un délai maximal de transmission d'une information sur chaque lien virtuel d'un équipement émetteur vers au moins un équipement récepteur et une allocation telle que pour toute liaison physique la somme des bandes passantes allouées aux différents liens virtuels empruntant cette liaison physique est inférieure à la bande passante de cette liaison physique, afin de garantir qu'il n'y aura jamais d'encombrement du réseau de communication.

Avantageusement la table d'allocation est telle qu'une bande passante peut être affectée à un ensemble de flux.

### Brève description des dessins

La figure 1 illustre un réseau de communication de l'art connu,.
La figure 2 illustre une architecture de type bus de l'art connu.
Les figures 3 à 5 illustrent des architectures en étoile de l'art connu.
La figure 6 illustre le dispositif de l'invention.
La figure 7 illustre un exemple de réalisation mettant en oeuvre le procédé de l'invention.

### Exposé détaillé de modes de réalisation

Le dispositif de l'invention reprend une couche physique de type "Ethernet", comme illustré sur la figure 6. Il met en ouvre des commutateurs spécifiques 20 dans lesquels sont définis, de façon statique, une table d'allocation T dont la fonction est d'associer une bande passante à chacun des liens virtuels.

Une telle table T a la forme suivante :

| Lien virtuel | Ports physiques | | Bande passante |
|---|---|---|---|
| | Emetteurs | Récepteurs | |
| · | | | |
| 14 | 1 | 3 | B₁₄ |
| 15 | 1 | 2 | B₁₅ |
| | | n | |
| 16 | 3 | 2 | B₁₆ |
| · | | | |

Cette allocation statique des bandes passantes aux différents liens virtuels permet de garantir un délai maximal de transmission d'une information d'un équipement émetteur vers un ou plusieurs équipements récepteurs. La table T, définie ci-dessus présente donc des avantages importants en matière de sûreté de fonctionnement.

Dans un autre mode de réalisation on affecte une bande passante à un ensemble de liens virtuels. En effet lorsque plusieurs liens virtuels, empruntant au moins une liaison physique commune, ne sont jamais tous actifs simultanément, il est possible de regrouper ces liens virtuels. Dans la table du commutateur, on peut alors allouer à ce groupe E de liens virtuels une bande passante plus petite que la somme des bandes passantes qui auraient été allouées aux différents liens virtuels pris séparément, cela sans dégrader les performances du dispositif quant au délai maximal de transmission d'une information.

Le groupe E de liens virtuels nécessitant une bande passante plus petite sur la liaison physique, il est possible de faire passer davantage de liens virtuels sur cette liaison physique. Ou, si cela n'est pas nécessaire, on peut augmenter la bande passante de ce groupe de liens virtuels empruntant la même liaison physique) ce qui permet de diminuer le délai maximal de transmission des informations

Considérant le fait que la bande passante nécessaire pour un sous-ensemble de liens virtuels peut être inférieure à la somme des bandes passantes individuelles de chacun de ces liens considérés indépendamment les uns des autres. Ce mode de réalisation consiste à définir la table du commutateur de telle sorte que l'on puisse affecter une bande passante à un groupe E de liens virtuels.

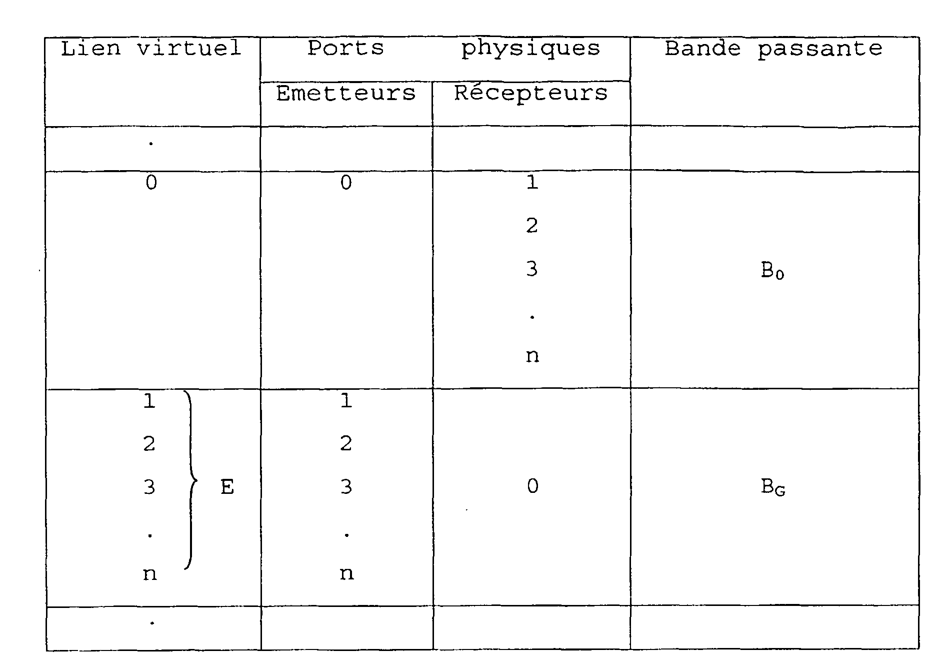

De façon plus générale, les liens virtuels se partageant une même bande passante peuvent arriver sur un ou plusieurs ports de commutation.

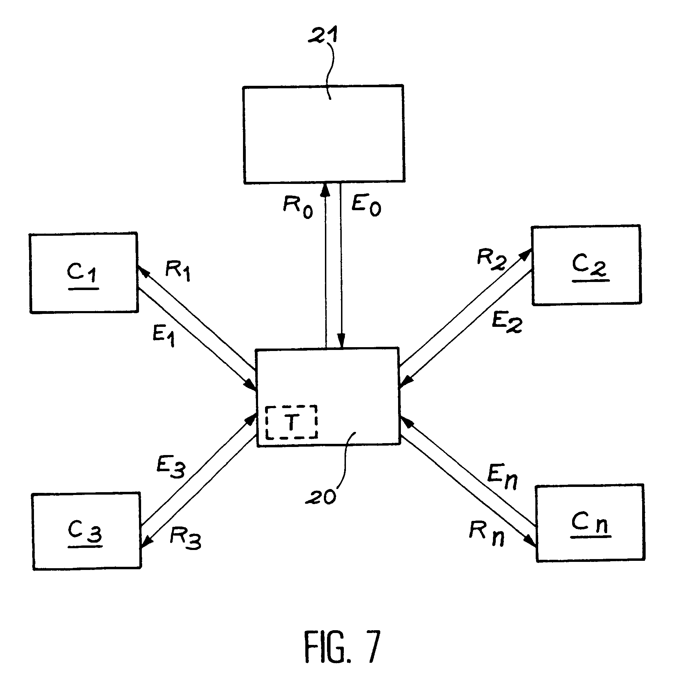

A titre d'exemple, on peut citer le cas suivant : lors des escales d'un avion dans un aéroport, il est parfois nécessaire de télécharger des mises à jour des équipements, ou de télédécharger des informations, à partir d'un poste 21 lui-même relié au réseau comme illustré sur la figure 7. Une telle opération nécessite un lien virtuel VL₀ du poste de téléchargement 21 vers chacun des équipements C₁, C₂,., Cₙ (envoi des informations aux équipements), ainsi que n liens virtuels VL₁, ., VLₙ des différents équipements vers le poste de téléchargement 21 (envoi de messages d'acquittement concernant le téléchargement). En pratique, le téléchargement s'effectue le plus souvent vers un seul équipement à la fois. Par conséquent, un seul des n liens virtuels VL₁, VLₙ est utilisé à un instant donné. Par contre, la table d'allocation T étant statique, il convient d'allouer une bande passante à chacun de ces n liens. La table d'allocation T étant identique pendant les phases de vol et pendant les phases d'escale, la bande passante utilisable pour le téléchargement est relativement restreinte (car il convient avant tout de garantir une bonne communication entre les différents équipements pendant le vol), tout en étant suffisante pour assurer un débit d'informations correct du poste de téléchargement 21 vers les équipements. Par contre, dans le sens inverse (des équipements vers le poste de téléchargement), les n liens virtuels VL₁, . VLₙ doivent se partager une bande passante de taille voisine de la précédente. La bande passante individuelle de chacun d'entre eux est donc très petite, ce qui peut avoir pour effet de ralentir le téléchargement.

Le dispositif de l'invention peut être étendu à tout type de réseau reliant entre eux des équipements devant échanger des informations avec un délai de transmission garanti. On peut donc considérer la notion de flux d'informations, un flux étant l'équivalent d'un lien virtuel dans le cas particulier du réseau étudié précédemment. Un flux correspond à la transmission d'informations d'un émetteur unique vers un ou plusieurs récepteurs. A chaque flux, on associe un budget défini comme étant la capacité maximale de transmission allouée à ce flux. Il correspond à la bande passante telle que définie ci-dessus. Dans un réseau classique, à un flux est associé un seul budget. Afin de garantir la sûreté de fonctionnement, cette association est réalisée de façon statique dans les réseaux embarqués tels que ceux utilisés, par exemple, en avionique. Afin de réaliser en bonne intelligence cette allocation statique budget-flux, le dispositif de l'invention permet l'association d'un même budget à plusieurs flux, qui pris individuellement nécessiteraient des budgets dont la somme dépasserait le budget total disponible.

## Revendications

1. Dispositif de contrôle de flux dans un réseau de communication commuté comprenant plusieurs équipements liés à au moins un commutateur (20) au moyen de plusieurs liaisons physiques, dans lequel au moins un lien virtuel, qui est une liaison logique unidirectionnelle empruntant au moins une liaison physique, permet d'envoyer des informations d'un équipement émetteur vers au moins un équipement récepteur, **caractérisé en ce que** chaque commutateur (20), qui gère de façon dynamique les liens virtuels et les débits afin de s'adapter au mieux au trafic instantané du réseau, comprend une table d'allocation (T), définie de façon statique, qui associe une bande passante à chacun des liens virtuels de manière à garantir un délai maximal de transmission d'une information sur chaque lien virtuel d'un équipement émetteur vers au moins un équipement récepteur et une allocation telle que pour toute liaison physique la somme des bandes passantes allouées aux différents liens virtuels empruntant cette liaison physique est inférieure à la bande passante de cette liaison physique, afin de garantir qu'il n'y aura jamais d'encombrement du réseau de communication.

2. Dispositif selon la revendication 1, dans lequel la table d'allocation (T) est telle qu'une bande passante peut être affectée à un ensemble de flux.

3. Procédé de contrôle de flux dans un réseau de communication commuté, comprenant plusieurs équipements liés à au moins un commutateur (20) au moyen de plusieurs liaisons physiques, dans lequel au moins un lien virtuel, qui est une liaison logique unidirectionnelle empruntant au moins une liaison physique, permet d'envoyer des informations d'un équipement émetteur vers au moins un équipement récepteur, **caractérisé en ce que**, dans le commutateur, qui gère de façon dynamique les liens virtuels et les débits afin de s'adapter au mieux au trafic instantané du réseau on utilise une table d'allocation (T) définie de façon statique, qui associe une bande passante à chacun des liens virtuels de manière à garantir un délai maximal de transmission d'une information sur chaque lien virtuel d'un équipement émetteur vers au moins un équipement récepteur et une allocation telle que pour toute liaison physique la somme des bandes passantes allouées aux différents liens virtuels empruntant cette liaison physique est inférieure à la bande passante de cette liaison physique, afin de garantir qu'il n'y aura jamais d'encombrement du réseau de communication.

4. Procédé selon la revendication 3, dans lequel la table d'allocation (T) est telle qu'une bande passante peut être affectée à un ensemble de flux.

## Claims

1. A device for controlling flows in a communication switched network comprising several devices linked to at least one switch (20) by means of many physical links, in which at least one virtual link, which is a logical single-direction link using at least one physical link, enables information to be sent from a transmitter device to at least one receiver device, **characterized in that** each switch, which manages the virtual links and transmission rates dynamically in order to adapt optimally to the instantaneous network traffic, contains an allocation table (T), defined statically, which associates a bandwidth with each of the virtual links so as to guarantee a maximum transmission time of an item of information, on each virtual link, from a transmitter device to one or more receiver devices, and an allocation such that for every physical link the sum of the bandwidths allocated to virtual links using this physical link is less than the bandwidth of this physical link, to guarantee that there will never be any congestion of the communication switched network.

2. A device according to claim 1, in which the allocation table (T) is such that a bandwidth may be allocated to a set of flows.

3. A process for controlling flows in a communication switched network, comprising several devices linked to at least one switch (20) by means of many physical links, in which at least one virtual link, which is a logical single-direction link using at least one physical link, allows information to be sent from a transmitter device to at least one receiver device, **characterized in that** in the switch, which manages the virtual links and transmission rates dynamically in order to adapt optimally to the instantaneous network traffic, an allocation table (T), defined statically, is used, which associates a bandwidth with each of the virtual links so as to guarantee a maximum transmission time of an item of information, in relation to each virtual link, from a transmitter device to one or more receiver devices, and an allocation such that for every physical link the sum of the bandwidths allocated to the various virtual links using this physical link is less than the bandwidth of this physical link, to guarantee that there will never be any congestion of the communication switched network.

4. A process according to claim 3, in which the allocation table (T) is such that a bandwidth may be allocated to a set of flows.

## Patentansprüche

1. Vorrichtung zur Flusskontrolle in einem geschalteten Kommunikationsnetz, umfassend mehrere Einrichtungen, die mittels mehrerer physischer Verbindungen mit mindestens einem Switch (20) verbunden sind, wobei mindestens eine virtuelle Verbindung, die eine, mindestens eine physische Verbindung nutzende unidirektionale logische Verbindung ist, das Senden von Informationen einer Sendereinrichtung an mindestens eine Empfängereinrichtung ermöglicht, **dadurch gekennzeichnet, dass** jeder Switch (20), der in dynamischer Weise die virtuellen Verbindungen und den Durchsatz zur besseren Anpassung an plötzlich auftretenden Netzverkehr verwaltet, eine Zuordnungstabelle (T) umfasst, die statisch festgelegt ist und jeder virtuellen Verbindung eine Bandbreite derart zuteilt, dass eine maximale Verzögerung der Weiterleitung einer Information über jede virtuelle Verbindung von einer Sendereinrichtung zu mindestens einer Empfängereinrichtung garantiert ist, und mit einer derartigen Zuordnung, dass für jede physische Verbindung die Summe der den verschiedenen virtuellen Verbindungen zugeordneten Bandbreiten, die diese physische Verbindung nutzen, geringer als die Bandbreite dieser physischen Verbindung ist, um zu garantieren, dass es niemals eine Verstopfung bzw. Störung des Kommunikationsnetzes gibt.

2. Vorrichtung nach Anspruch 1, wobei die Zuordnungstabelle (T) derart ist, dass eine Bandbreite einem Flusssystem zugeordnet sein kann.

3. Verfahren zur Flusskontrolle in einem geschalteten Kommunikationsnetz, mit mehreren Einrichtungen, die mittels mehrerer physischer Verbindungen mit mindestens einem Switch (20) verbunden sind, wobei mindestens eine virtuelle Verbindung, die eine, mindestens eine physische Verbindung nutzende unidirektionale logische Verbindung ist, das Senden von Informationen einer Sendereinrichtung an mindestens eine Empfängereinrichtung ermöglicht, **dadurch gekennzeichnet, dass** in dem Switch, der in dynamischer Weise die virtuellen Verbindungen und den Durchsatz zur besseren Anpassung an plötzlich auftretenden Netzverkehr verwaltet, eine Zuordnungstabelle (T) verwendet wird, die statisch festgelegt ist und jeder virtuellen Verbindung eine Bandbreite derart zuteilt, dass eine maximale Verzögerung der Weiterleitung einer Information über jede virtuelle Verbindung von einer Sendereinrichtung zu mindestens einer Empfängereinrichtung garantiert ist, und mit einer derartigen Zuordnung, dass für jede physische Verbindung die Summe der den verschiedenen virtuellen Verbindungen zugeordneten Bandbreiten, die diese physische Verbindung nutzen, geringer als die Bandbreite dieser physischen Verbindung ist, um zu garantieren, dass es niemals eine Verstopfung bzw. Störung des Kommunikationsnetzes gibt.

4. Verfahren nach Anspruch 3, wobei die
Zuordnungstabelle (T) derart ist, dass eine Bandbreite einem Flusssystem zugeordnet sein kann.
